# EUROPEAN PATENT SPECIFICATION

(11) **EP 3 906 821 B1**
(45) Date of publication and mention of the grant of the patent: **04.01.2023**
(21) Application number: 21172711.0
(22) Date of filing: 07.05.2021
(51) Int. Cl.: A47J 31/36

(54) **INFUSION GROUP FOR MACHINES FOR THE PREPARATION OF BEVERAGES, INTENDED FOR THE USE OF PREPACKAGED CHARGES MADE WITH A CONTAINER BODY IN FLEXIBLE MATERIAL**
INFUSIONSGRUPPE FÜR MASCHINEN ZUR ZUBEREITUNG VON GETRÄNKEN, DIE ZUR VERWENDUNG VON VORGEPACKTEN, MIT EINEM BEHÄLTERKÖRPER AUS FLEXIBLEM MATERIAL HERGESTELLTEN CHARGEN BESTIMMT IST
GROUPE D'INFUSION POUR MACHINES DE PRÉPARATION DE BOISSONS, DESTINÉ À L'UTILISATION DE CHARGES PRÉCONDITIONNÉES FABRIQUÉES À L'AIDE D'UN CORPS DE RÉCIPIENT EN MATÉRIAU SOUPLE

(30) Priority: 08.05.2020 IT 202000010360
(43) Date of publication of application: 10.11.2021
(73) Proprietor: BARDAZZI, Bruno, 50059 Vinci FI (IT)
(72) Inventor: BARDAZZI, Bruno, 50059 Vinci FI (IT)
(74) Representative: Leucci, Lidia

(56) References cited:
- WO-A1-95/17121
- WO-A1-2013/020822
- FR-A1- 2 998 463
- IT-A1-201800 001 468

## Description

The present invention relates to an infusion group for beverage preparation machines that involve the use of prepackaged charges of edible material. In particular it relates to machines for the preparation of beverages that comprise the use of prepackaged charges realized with a container body made of flexible material, namely the so-called pods.

In the last twenty-five years, the evolution of technology in the field of machines for the preparation of beverages, and in particular in that of coffee machines, has highlighted one aspect in particular, among others, relating to the use of machines: that is, the preference of an appliance in which the prepackaged charge could be inserted in a machine without removable parts, except for occasional cleaning treatments, and, in the alternative, that the prepackaged charge was ejected automatically or semi-automatically at the end of the production of the desired drink. Consequently, a number of apparatuses have been developed in which the infusion group, understood as the part of the machine into which the infusion liquid is fed, generally hot water under a given pressure, and in which the beverage to be dispensed is prepared, by extraction or dissolution of a particulate edible material, comprises an infusion chamber formed by two mutually complementary portions suitable, once coupled, to receive the prepackaged charge of edible material. The two portions, which comprise both the means for feeding the infusion liquid and the dispensing means for the prepared beverage, are provided with relative movement in respect to each other, the movement is suitably guided, and releasable coupling means are provided between the two portions. Upon separation of the two portions following to the production of the beverage, the exhausted prepackaged charge is expelled, preferably in an automatic way.

The structure, the positioning and the movements of the infusion group in the machines of the type described above therefore derive from the desire to provide a machine that is on the one hand capable of making the beverage in the most correct operating conditions, and which on the other hand is capable of automatically or semi-automatically removing the exhausted prepackaged charge.

Numerous and different approaches to this problem are known at the state of the art, with solutions that appear more or less brilliant. For example, documents such as WO2007031378, of which the present applicant is the inventor, EP1495702, EP2717749, EP3053490, EP2858538, as well as many others could be mentioned. The most relevant functional considerations that can be made on all these devices are based on the fact that they strongly depend on the structural features of the prepackaged charge with which they are intended to cooperate. Accordingly, the prepackaged charges of the more rigid materials can be expelled from the infusion unit by acting on the protruding radial flange with which they are normally provided, while this type of expulsion is more difficult if the material of the container body has a lower consistency; in this case, means will be preferred which push the container body of the exhausted prepackaged charge out of the infusion chamber.

In particular, the so-called coffee pods, that is the prepackaged charges made with two layers of flexible material that enclose the coffee powder, which are welded together along a substantially circular path, leaving a flange of material protruding radially with respect to the portion containing the powder, show a significant difficulty in handling, precisely because of their reduced structural consistency. Despite this, they are widely used, above all because they are extremely cheap from the construction point of view, as well as being in most cases made of biodegradable materials, and therefore being much easier to dispose of, once exhausted.

Document EP0735837 describes and illustrates a machine for the preparation of beverages which provides a mechanism for expelling the exhausted prepackaged charge; the prepackaged charges used in this machine have the features of the so-called pods. It cannot be avoided to notice that the mechanism used by the machine described in this document is decidedly very complex, and that it can probably be often subject to jams, due to the very nature of the prepackaged charge. Furthermore, the orientation axis of the infusion group of this machine, arranged parallel to the horizontal plane to favor the gravity fall of the exhausted prepackaged charge, is certainly not the most appropriate for the best operation of the machine when extracting the infusion.

Document EP1050258B1 describes a pod feeding device in machines for the preparation of espresso coffee, comprising a retractable drawer that incorporates a lower support, which also includes means for retaining the pods which are not movable integrally with the drawer, and are activated and deactivated when the drawer is retracted. This device allows the pod to be pulled out of the portion of the infusion chamber included in the drawer, but the low toughness of the pod, whose paper container body loses consistency when wet, would actually lead to partial or total breakage of the container body; this is also a consequence of the fact that the exhausted pod tends to adhere to the bottom wall of the cavity in which it is housed, and its weight is naturally greater than the initial one, due to the water it is soaked in.

Patent application No. 102019000019950, filed by the present applicant, describes an infusion group for machines for the preparation of beverages which use prepackaged charges made with the container body in flexible material, comprising an infusion chamber, provided with feeding means of the infusion liquid and dispensing means of the prepared beverage, formed by two mutually complementary portions and suitable, once coupled, to receive a prepackaged charge of edible material, in which the two portions of said infusion chamber are provided with movement relative to each other, and the movement is suitably guided, and releasable coupling means are provided between the two portions, , being provided means for expelling the exhausted prepackaged charge, which are activated upon separation of the two portions of said infusion chamber; the two portions both have a semi-lenticular cavity suitable for receiving the prepackaged charge; the relative movement is composite, and includes the movement towards and away of the two portions, both along a direction parallel to the axis of symmetry of said respective cavities, and along a direction perpendicular to said axis; the expulsion means comprise means suitable for temporarily cooperating with the peripheral edge of said prepackaged charge; said axis of symmetry of the cavities of the said two portions of the infusion chamber is perpendicular to a generic horizontal plane, which is in turn parallel to the support plane of the machine in which said infusion group is inserted, being in this way defined an upper portion and a lower portion of said infusion chamber, said expulsion means being integral with said upper portion of said infusion chamber.

The solution described above, although capable of solving numerous problems arising in the state of the art, similarly provides for a composite movement of the two portions of the brewing chamber, which creates considerable structural constraints in the construction of the machine intended to adopt the infusion group.

An infusion group for machines for the preparation of beverages according to the preamble of claim 1 is known from IT 201800001468 A1.

The aim of the present invention is therefore an infusion group for machines for the preparation of beverages which use prepackaged charges having the container body made of flexible material, in which means are provided for expelling the exhausted prepackaged charge that are able to perform their task without requiring a composite relative movement of the two portions of the infusion chamber.

The object of the present invention is therefore an infusion group for machines for the preparation of beverages which use pre-packaged charges having the container body made of flexible material, comprising an infusion chamber, equipped with means for feeding the infusion liquid and dispensing means of the prepared beverage, formed by two portions complementary to each other and suitable, once coupled, to receive a prepackaged charge of edible material, in which the two portions of said infusion chamber are provided with relative movement in respect to each other , and the movement is suitably guided, and means for coupling the two releasable portions are provided, being provided means for expelling the exhausted prepackaged charge which are actuated when the two portions of said infusion chamber are separated; the two portions both have a semi-lenticular cavity suitable for receiving the prepackaged charge; the relative movement includes the movement towards and away of the two portions along a direction parallel to the axis of symmetry of the said respective cavities; the expulsion means comprise means suitable for temporarily cooperating with the peripheral edge of said prepackaged charge; said axis of symmetry of the cavities of said two portions of the infusion chamber is perpendicular to a generic horizontal plane, which is in turn parallel to the support plane of the machine in which said infusion group is inserted, said ejection means being movable by means of suitable movement means, along a direction lying on said generic horizontal plane, towards and away from said infusion chamber, said expulsion means being arranged in contact with the infusion chamber upon coupling of the two portions of the infusion chamber, and said expulsion means being moved away upon separation of said two portions of the infusion chamber.

In a preferred embodiment, said ejection means comprise a gripper mounted at the end of a rod, coupled at the opposite end to said movement means, the jaws of said gripper being pivoting about an axis perpendicular to said rod, and arranged on the same horizontal plane, and the said jaws being provided with releasable mutual coupling means. In a variant embodiment, said coupling means comprise magnets.

In a further embodiment, said means for moving the said ejection means are synchronized with respect to the coupling and separation movement of the two portions of the infusion chamber, so that said ejection means reach said infusion chamber before two portions are coupled together, and that they move apart after the two portions are separated from each other. Advantageously, said movement means of said expulsion means also impart the actuation to the relative movement between said portions of the infusion chamber, by means of guide means coupled to said movement means.

In another embodiment of the invention, said movement means comprise a hydraulic jack connected to the pressurized water supply circuit of the beverage preparation machine.

A further object of the present invention is a machine for preparing beverages comprising an infusion group as described above, a water tank, a pump connected to said tank, and water heating means connected to said infusion group and in fluid communication with said pump, in which said hydraulic jack is suitable to act as a distribution valve of said pressurized water supply circuit, being provided with a cylindrical chamber in which at least two radial ports are formed which place it in communication with the conduit for feeding pressurized water to the infusion chamber and with the discharge conduit to the water tank, being provided a piston sliding sealed in said chamber.

Further advantages and features of the present invention will become evident from the following description of some embodiments of the same, by way of non-limiting example, with reference to the attached drawing tables, in which:
Figure 1 is a perspective view of the infusion group according to the present invention;
Figure 2 is a view similar to that of Figure 1, with some parts removed;
Figure 3 is a cross-sectional view of the brewing unit of Figure 1;
Figure 4 is a longitudinal sectional view of the infusion group of the present invention, illustrated at the beginning of its operating sequence;
Figures 5 to 11 are views similar to that of Figure 4, depicting the different phases of the operating sequence of the infusion group of the invention;
figure 12 illustrates a schematic diagram showing the beverage preparation machine according to the present invention, in an operating phase; and
Figure 13 illustrates the machine of Figure 12 in another operating phase.

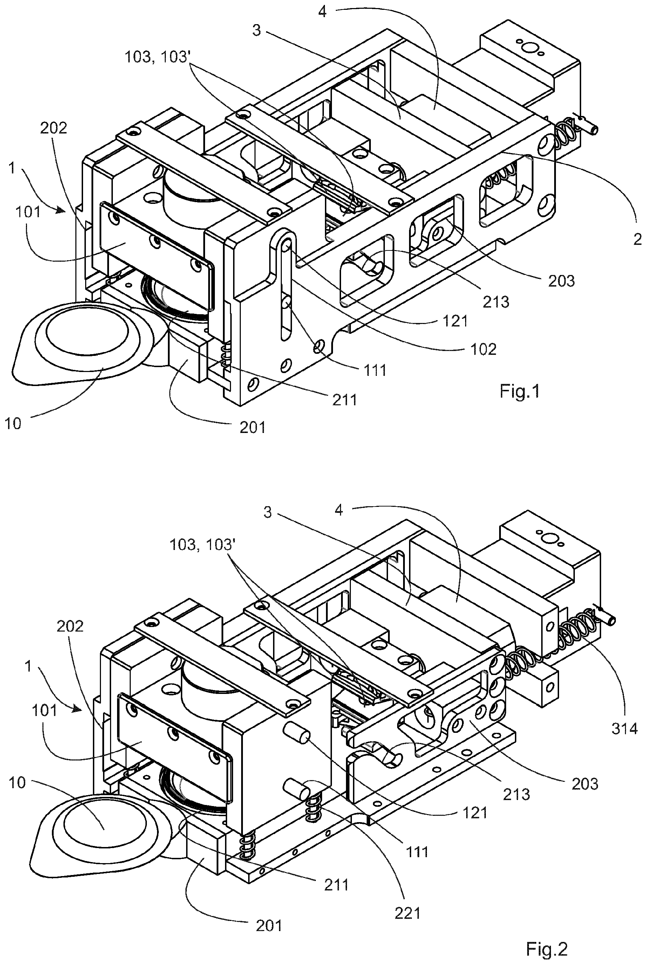

Figure 1 illustrates an embodiment of the infusion group according to the present invention; 1 designates the infusion chamber, comprising the upper movable portion 101 and the lower fixed portion 201. Said movable portion 101 has radially protruding pins 111 and 121 which cooperate with the slot 102 formed in the frame 2; about the fixed portion 201 it can be seen, on the other hand, the cavity 211 for housing the pre-packaged charge 10. The crosspiece 3, coupled to the jack 4, carries the jaws 103, 103' in the manner better described below. Both ends of the crosspiece are associated with the plates 203 in which the cam guides 213 are formed, intended to cooperate with the pins 111 projecting from the mobile portion 101 of the infusion chamber 1,; the plates 203 slide in the guides 202 formed in the internal face of the frame 2.

Figure 2 shows the same embodiment of the infusion group of Figure 1, except for the partial removal of the frame 2; to equal parts correspond equal numerals. The figure shows both the guide and elastic loading means 221 of the upper portion 101 with respect to the fixed portion 201, as well as the elastic loading means 314 of the crosspiece 3 with respect to the jack 4.

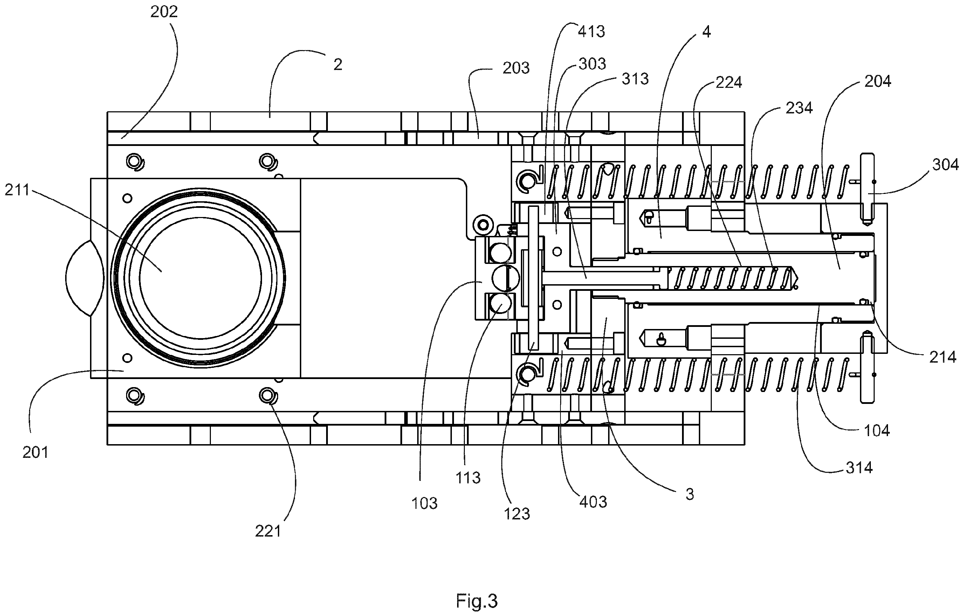

Figure 3 shows a cross section of the infusion group of Figure 1; to equal parts correspond equal numerals. In the figure a clearer detail is provided regarding the means for expelling the exhausted charge from the infusion chamber 1, which in this case comprise the jaw 103, which together with the jaw 103', not visible in the figure, is pivoted to the pin 123, the ends of which are inserted in the slots 413 of the plates 403 integral with the crosspiece 3; the jaw 103 has two magnets 113 integrated therein. The pin 123 is mounted on the bracket 303, which is provided with a rod 313 which, crossing the crosspiece 3, is inserted into the cavity 224 formed in the piston 204, and abuts against the spring 234 housed in the same cavity. The piston is slidably inserted into the cylindrical chamber 104 formed in the jack 4; the end 214 of the piston 204 has a section equal to that of the cylindrical chamber, while the rest of the piston 204 has a slightly lower section. At the end of the jack 4 opposite to the crosspiece 3, the protruding radial pins 304 are inserted, to which the ends of the springs 314 are secured, which at the opposite ends are connected to the crosspiece 3.

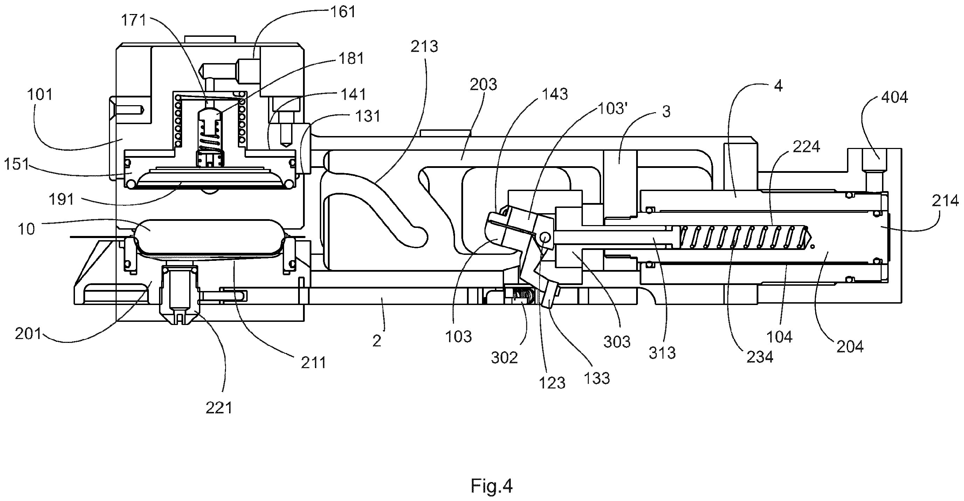

Figure 4 shows a longitudinal section of the infusion group of the invention, with the prepackaged charge 10 inserted in the cavity 211 of the fixed portion 201, before the infusion of the drink. Equal parts correspond to equal numerals; the figure shows the cavity 191 of the movable portion 101, made in the compensation piston 151, which is movable in the chamber 141 formed in the portion 101. The pressurized water is fed through the duct 161 into the chamber 141, and from here, through the duct 171 to the cavity 191, with the interposition of the valve 181. The movable portion has the outlet edge 131. The fixed portion 201 has the beverage dispensing duct 221.

The figure also shows the pair of jaws 103, 103'; the jaw 103 has the protruding arm 133 intended to cooperate with the ratchet 302 arranged in the lower portion of the frame 2 of the infusion unit. The jaw 103' instead has a cavity 143 on its upper face, intended to cooperate with the trailing edge 131 of the mobile portion 101. The pressurized water is fed into the jack 4 through the duct 404.

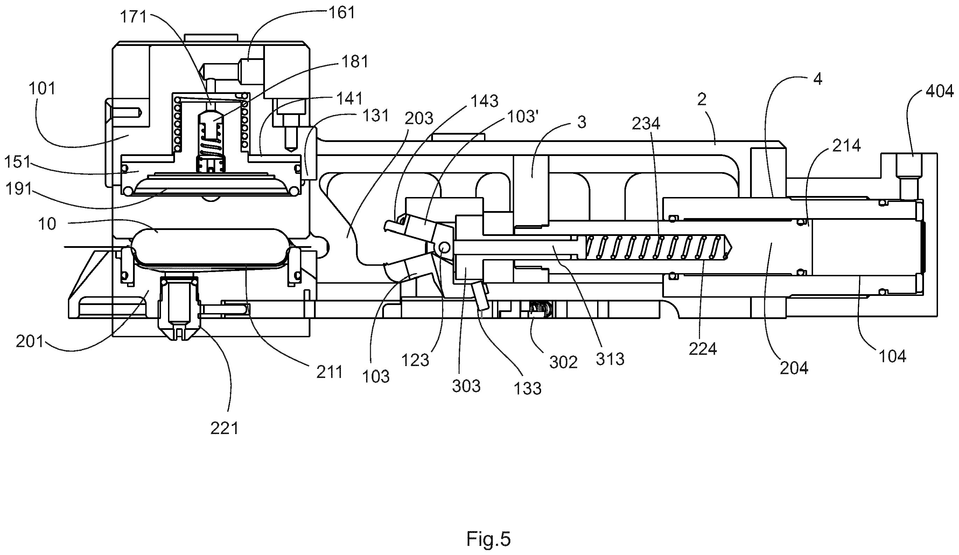

The operation of the infusion group according to the present invention will appear evident from the following, with reference to Figures 5 to 11. As can be seen in Figure 5, when the pressurized water is fed into the cylinder 4 through the duct 404, the piston 204 advances into the chamber 104, and with it both the crosspiece 3 carrying the plates 203 and the corresponding guides 213 intended to interact with the pins 111 protruding from the mobile portion 101 of the infusion chamber 1, and the rod 213 which carries the bracket 303 which in turn supports the pin 123 and the jaws 103, 103'. The latter were opened by the interaction of the ratchet 302 with the arm 133 of the jaw 103.

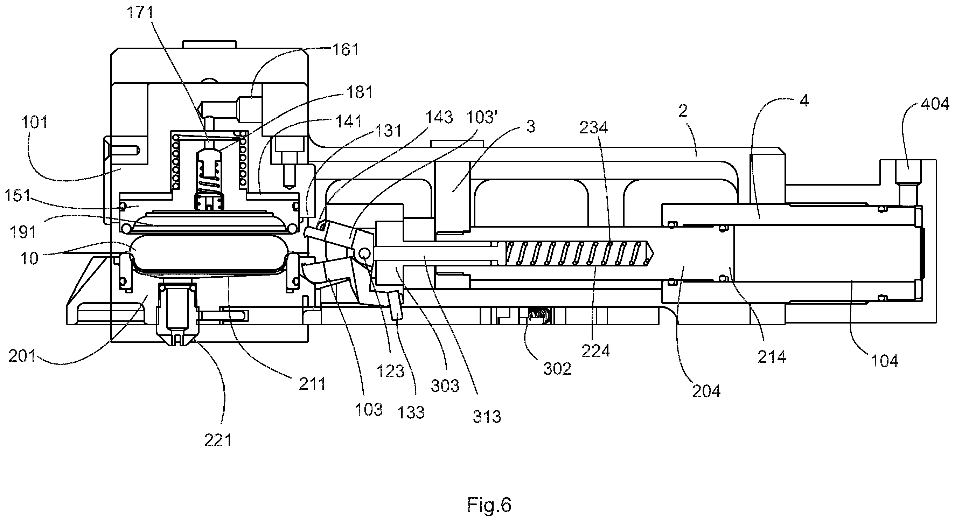

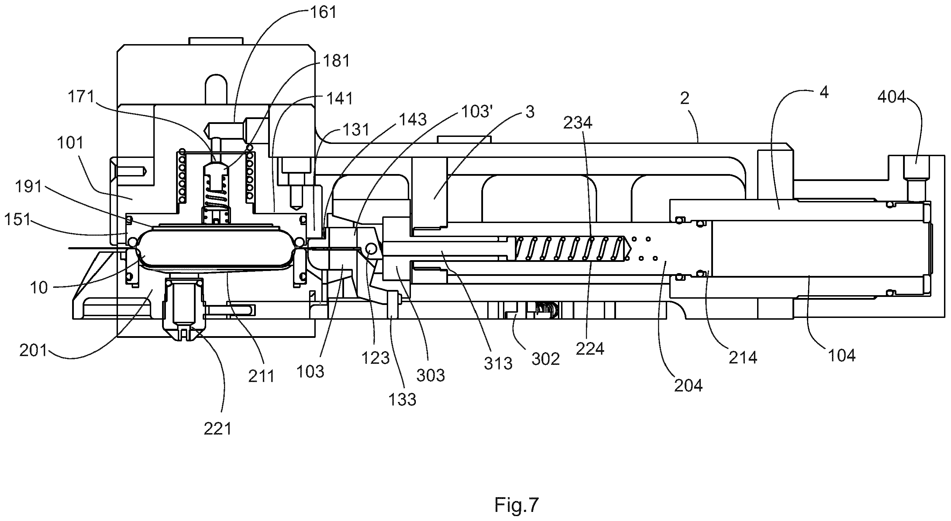

Subsequently, as can be seen from Figure 6, the movable portion 101 approaches the fixed portion 201, and the jaws have now reached the perimeter edge of the charge 10, and are able to grasp it. At the end of the coupling stroke of the two portions of the brewing chamber (see Figure 7), the jaws 103, 103 'have gripped the perimeter edge of the prepackaged charge, and the trailing edge 131 of the upper portion 101 abuts against the cavity 143 formed in jaw 103 '. The delay between the gripping by the jaws 103, 103 'on the edge of the charge and the coupling of the two portions of the brewing chamber is given by the further stroke that the plates 203 can perform with respect to the jaws, which in turn is due to the plates 403 in whose slots the ends of the pin 123 slide (see fig. 3).

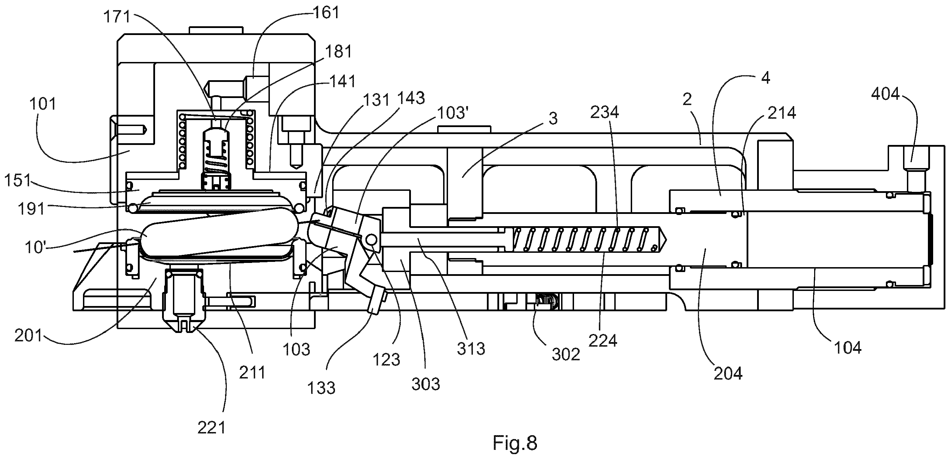

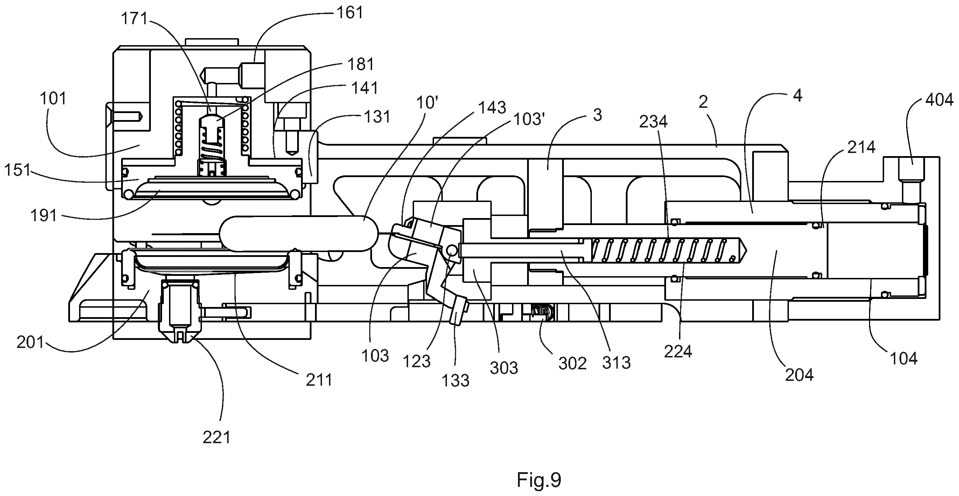

At this point, the pressurized water will be delivered through the duct 161, and from this to the infusion of the coffee contained in the charge 10, which will be discharged into a suitable container, not shown in the figure, from the delivery duct 221. After the delivery of the infusion (Figure 8), the supply of pressurized water is interrupted, the water begins to flow out of the duct 404 and the piston 204 begins its return stroke. Consequently, the portion 101 will rise, thus allowing the jaws to rotate upwards, lifting the charge 10'. Conveniently, the jaws are made so as to rise with respect to the horizontal plane, so as to lift the exhausted charge 10' from the cavity 211. The jaws remain in grip on the peripheral edge of the charge 10' thanks to the presence of the magnets 113. The expulsion of the charge exhausted proceeds (figure 9), and the two portions of the brewing chamber return to the position of figure 4.

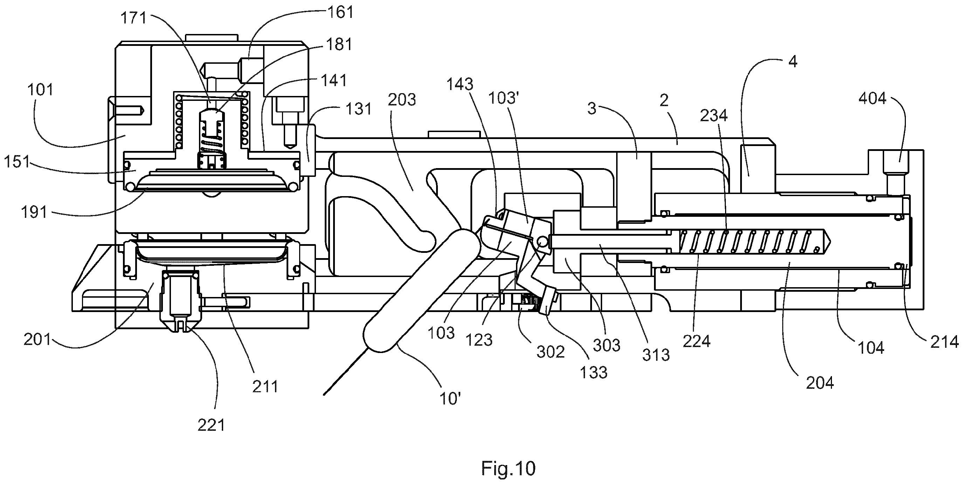

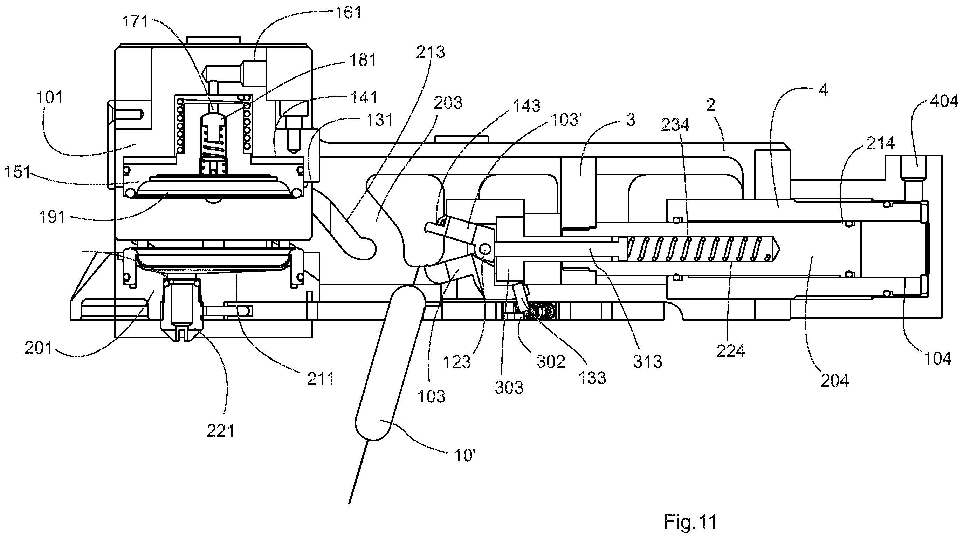

Finally (figure 10), the charge is completely brought out of the cavity 211 and the infusion chamber; the ratchet in this return passage allows the jaws to remain closed on the peripheral edge of the prepackaged charge. When the pressurized water is fed back into the chamber 104 of the jack 4 (figure 11), the jaws will reopen and the exhausted charge 10 'will be released to a collection container, below the infusion unit and not shown in the figure.

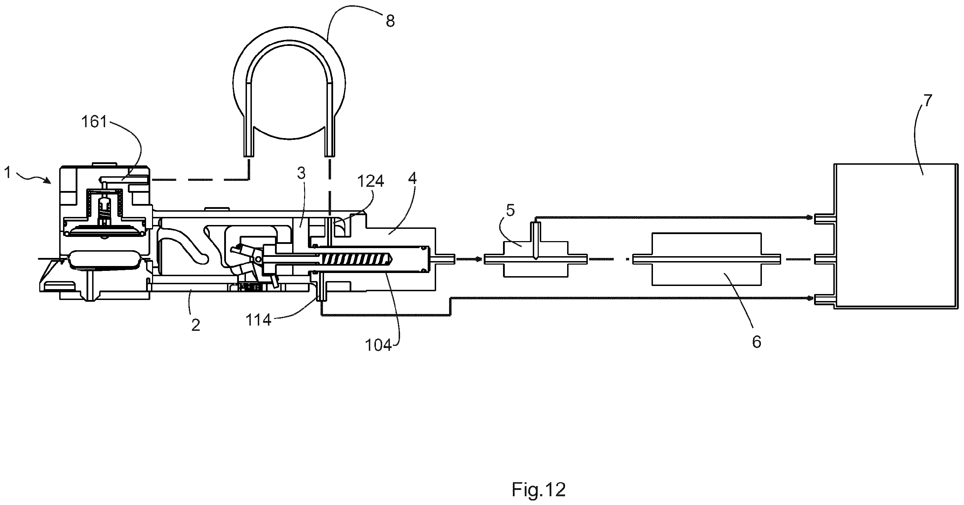

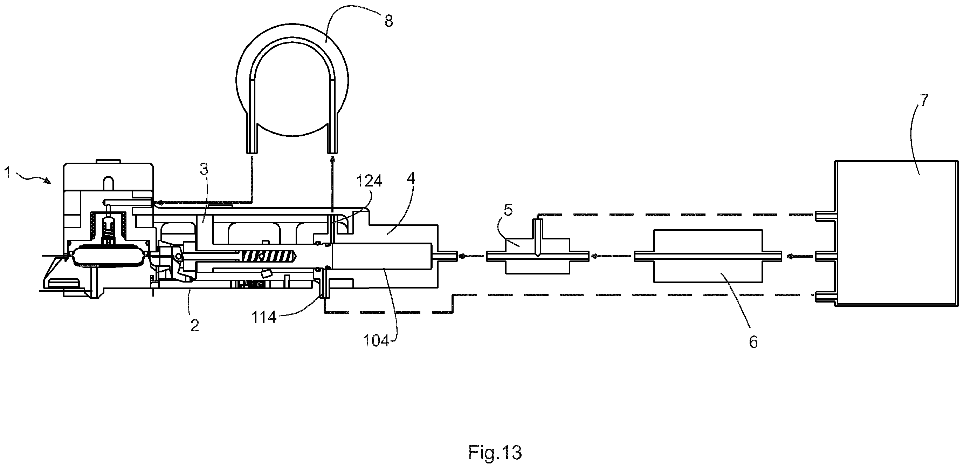

Figure 12 illustrates an embodiment of a machine for preparing beverages, and in the present case of coffee, which implements the previously described and illustrated brewing unit. Equal parts correspond to equal numerals; the machine has a tank 7 connected to a pump 6, to an exhaust duct connected to a solenoid valve 5, and to an exhaust duct connected to the duct 114 of the chamber 104 of the jack 4. The aforementioned chamber 104 provides a further radial duct 124 communicating with the heater 8 which in turn communicates with the supply duct 161 of the mobile portion of the infusion chamber 1. As can be seen clearly from Figure 13, once the pressurized water has brought the mobile portions of the infusion chamber to close and the jaws gripped on the edge of the prepackaged charge, the chamber 104 is put in communication with the path of feeding water to the heater and then to the means for feeding the movable portion of the infusion chamber. When the supply is interrupted, the solenoid valve 5 allows the water to flow from the pipe that feeds the jack 4 towards the tank 7, and at the same time the return flow from the brewing chamber will be discharged through the pipes 124 and 114 towards the tank 7.

In this way, the hydraulic jack used to operate the means of expelling the exhausted prepackaged charge also ensures the distribution of the pressurized water supply flow, so as to prevent the water used in the jack 4 from being heated.

The infusion group according to the present invention is therefore provided with means for expelling the exhausted prepackaged charge which make the relative movement of the two portions of the infusion chamber extremely simplified, and therefore reduce the need for operating spaces.

At the same time, the adoption of a hydraulic jack as the actuation means exploits a driving force, the water pressure, already available in the coffee machine, and which can therefore be used to move both the ejection means and portions of the infusion chamber.

Finally, the hydraulic jack in question can be made so as to distribute the flow of pressurized water in a convenient way for the operation of the machine itself.

## Claims

1. Infusion group for machines for the preparation of beverage that use prepackaged charges made with the container body in flexible material, comprising an infusion chamber (1), equipped with means for feeding (161, 171) the infusion liquid and means for dispensing (221) the prepared beverage, consisting of two portions (101, 201) complementary to each other and suitable, once coupled, to accommodate a prepackaged charge (10) of edible material, in which the two portions of said infusion chamber are provided with relative movement with respect to each other, and the movement is suitably guided , and releasable coupling means(111, 213) are provided between the two portions, means being also provided for expelling (103) the exhausted prepackaged charge, actuated when the two portions (101, 201) of said infusion chamber are separated; the two portions both have a semi-lenticular cavity (191, 211) suitable for accommodating the prepackaged charge; the relative movement includes the movement towards and away from each other of the two portions along a direction parallel to the axis of symmetry of the respective cavities; the expulsion means (103) comprise means suitable for temporarily cooperating with the peripheral edge of said prepackaged charge; said axis of symmetry of the housing cavities (191, 211) of said two portions of the infusion chamber is perpendicular to a generic horizontal plane, which is in turn parallel to the support plane of the machine in which said infusion unit is inserted, **characterized in that** said expulsion means (103) are movable, by means of suitable moving means, (4, 104, 204) along a direction lying on said generic horizontal plane, approaching and moving away from said infusion chamber (1), said expulsion means (103) being arranged in contact with the infusion chamber (1) at the time of coupling of the two portions (101, 201) of the infusion chamber, and said expulsion means (103) being moved away from said infusion chamber (1) when the said two portions (101, 201) of the same are separated.

2. Infusion group according to claim 1, wherein said expulsion means (103) comprise a gripper mounted at the end of a rod, coupled to the opposite end to said moving means, said gripper comprises jaws (103, 103') pivoting with respect to a perpendicular axis to said rod, and arranged on the same horizontal plane, and said jaws being provided with mutual coupling means (113), releasable.

3. Infusion unit according to claim 2, wherein said mutual coupling means of said jaws comprise magnets (113).

4. Infusion group according to any one of the preceding claims 1 to 3, wherein said means for moving (4, 104, 204) said expulsion means (103) are synchronized with respect to the coupling and separation movement of the two portions (101, 201) of the infusion chamber, so that said means of expulsion (103) reach said infusion chamber before two portions (101, 201) are coupled to each other, and that they move away after the two portions are separated from each other.

5. Infusion group according to claim 4, wherein said moving means (4, 104, 204) of said expulsion means also impart the actuation of the relative movement between the said portions (101, 201) of the infusion chamber, by means of guide means (203, 213) coupled to said moving means.

6. Infusion group according to any one of the preceding claims 1 to 5, wherein said moving means (4, 104, 204) comprise a hydraulic jack (4) connected to the pressurized water supply circuit of the machine for preparing beverages.

7. Beverage preparation machine comprising an infusion group according to claim 6, a water tank (7), a pump (6) connected to said tank (7), and water heating means (8) connected to said infusion group (1) and in fluid communication with said pump (6), in which said hydraulic jack (4) is suitable to act as a distribution valve of said circuit for supplying pressurized water, being provided with a cylindrical chamber (104) in which at least two radial ports (114, 124) are formed, putting the same chamber in communication with the duct for feeding the pressurized water to the infusion chamber and with the discharge duct to the water tank (7), and a piston (204) sliding sealed in the said chamber being provided.

## Patentansprüche

1. Infusionsgruppe für Maschinen zur Zubereitung von Getränken, die vorverpackte Chargen verwenden, die mit dem Behälterkörper aus flexiblem Material hergestellt sind, mit einer Brühkammer (1), die mit Mitteln zur Zuführung (161, 171) der Brühflüssigkeit und Mitteln zur Abgabe (221) des zubereiteten Getränks versehen ist, die aus zwei Teilen (101, 201) besteht, die zueinander komplementär und geeignet sind, wenn sie verbunden sind, eine vorverpackte Charge (10) aus essbarem Material aufzunehmen, wobei die beiden Teile der Brühkammer mit einer Relativbewegung zueinander versehen sind, die in geeigneter Weise geführt wird, und lösbare Kopplungsmittel (111, 213) zwischen den beiden Teilen vorgesehen sind, wobei auch Mittel zum Auswerfen (103) der verbrauchten vorverpackten Charge vorgesehen sind, die betätigt werden, wenn die beiden Teile (101, 201) der Brühkammer getrennt werden; die beiden Teile weisen beide einen halblentikulären Hohlraum (191, 211) auf, der geeignet ist, die vorverpackte Charge aufzunehmen; die Relativbewegung die Bewegung der beiden Teile aufeinander zu und voneinander weg entlang einer Richtung parallel zur Symmetrieachse der jeweiligen Hohlräume umfasst; die Auswurfmittel (103) Mittel umfassen, die geeignet sind, vorübergehend mit dem Umfangsrand der vorverpackten Charge zusammenzuwirken; die Symmetrieachse der Aufnahmehohlräume (191, 211) der beiden Abschnitte der Brühkammer senkrecht zu einer allgemeinen horizontalen Ebene verläuft, die ihrerseits parallel zur Stützebene der Maschine verläuft, in der die Brühkammer eingesetzt ist, **dadurch gekennzeichnet, dass** die Auswurfmittel (103) durch geeignete Bewegungsmittel (4, 104, 204) entlang einer Richtung beweglich sind, die auf der allgemeinen horizontalen Ebene liegt, sich der Brühkammer (1) nähern und sich von ihr entfernen, wobei die Auswurfmittel (103) zum Zeitpunkt der Verbindung der beiden Teile (101, 201) der Brühkammer in Kontakt mit der Brühkammer (1) angeordnet sind und die Auswurfmittel (103) von der Brühkammer (1) entfernt werden, wenn die beiden Teile (101, 201) derselben getrennt werden.

2. Infusionsgruppe nach Anspruch 1, wobei die Auswurfmittel (103) einen Greifer umfassen, der am Ende einer Stange angebracht ist, die mit dem der Bewegungseinrichtung gegenüberliegenden Ende gekoppelt ist, wobei der Greifer Klemmbacken (103, 103') umfasst, die in Bezug auf eine senkrechte Achse zu der Stange schwenkbar und in derselben horizontalen Ebene angeordnet sind, und wobei die Klemmbacken mit gegenseitigen Kopplungsmitteln (113) versehen sind, die lösbar sind.

3. Infusionsgruppe nach Anspruch 2, wobei die Mittel zur gegenseitigen Kopplung der Klemmbacken aus Magneten (113) bestehen.

4. Infusionsgruppe nach einem der vorhergehenden Ansprüche 1 bis 3, wobei die Mittel zum Bewegen (4, 104, 204) der Auswurfmittel (103) in Bezug auf die Kopplungs- und Trennungsbewegung der beiden Teile (101, 201) der Brühkammer synchronisiert sind, so dass die Auswurfmittel (103) die Brühkammer erreichen, bevor zwei Teile (101, 201) miteinander gekoppelt werden, und dass sie sich wegbewegen, nachdem die beiden Teile voneinander getrennt sind.

5. Infusionsgruppe nach Anspruch 4, **dadurch gekennzeichnet, dass** die Bewegungsmittel (4, 104, 204) der Auswurfmittel auch die Betätigung der Relativbewegung zwischen den Teilen (101, 201) der Brühkammer mittels Führungsmitteln (203, 213), die mit den Bewegungsmitteln gekoppelt sind, bewirken.

6. Infusionsgruppe nach einem der vorhergehenden Ansprüche 1 bis 5, **dadurch gekennzeichnet, dass** die Bewegungsmittel (4, 104, 204) einen hydraulischen Heber (4) umfassen, der an den Druckwasserversorgungskreislauf der Maschine zur Zubereitung von Getränken angeschlossen ist.

7. Getränkezubereitungsmaschine mit einer Infusionsgruppe nach Anspruch 6, einem Wassertank (7), einer mit dem Tank (7) verbundenen Pumpe (6) und einer mit der Infusionsgruppe (1) verbundenen und mit der Pumpe (6) in Fluidverbindung stehenden Wassererwärmungseinrichtung (8), wobei der hydraulische Heber (4) geeignet ist, als Verteilerventil des Kreislaufs für die Zufuhr von unter Druck gesetztem Wasser zu wirken, mit einer zylindrischen Kammer (104) versehen ist, in der mindestens zwei radiale Öffnungen (114, 124) ausgebildet sind, die dieselbe Kammer mit der Leitung für die Zufuhr des Druckwassers zur Aufgusskammer und mit der Abflussleitung zum Wassertank (7) in Verbindung bringen, und ein Kolben (204) vorgesehen ist, der abgedichtet in der Kammer gleitet.

## Revendications

1. Groupe d'infusion pour machines pour la préparation de boissons qui utilisent des charges préemballées réalisées avec le corps du récipient en matériau flexible, comprenant une chambre d'infusion (1), équipée de moyens pour alimenter (161, 171) le liquide d'infusion et de moyens pour distribuer (221) la boisson préparée, consistant en deux parties (101, 201) complémentaires l'une de l'autre et appropriées, une fois couplées, pour recevoir une charge préemballée (10) de matériau comestible, dans lequel les deux parties de ladite chambre d'infusion sont pourvues d'un mouvement relatif l'une par rapport à l'autre, et le mouvement est convenablement guidé, et des moyens de couplage libérables (111, 213) sont prévus entre les deux parties, des moyens étant également prévus pour expulser (103) la charge préemballée épuisée, actionnés lorsque les deux parties (101, 201) de ladite chambre d'infusion sont séparées ; les deux parties ont toutes deux une cavité semi-lenticulaire (191, 211) appropriée pour recevoir la charge préemballée ; le mouvement relatif comprend le mouvement de rapprochement et d'éloignement des deux parties le long d'une direction parallèle à l'axe de symétrie des cavités respectives ; les moyens d'expulsion (103) comprennent des moyens adaptés pour coopérer temporairement avec le bord périphérique de ladite charge préemballée ; ledit axe de symétrie des cavités de logement (191, 211) desdites deux parties de la chambre de perfusion est perpendiculaire à un plan horizontal générique, qui est à son tour parallèle au plan de support de la machine dans laquelle ladite unité de perfusion est insérée, **caractérisé en ce que** lesdits moyens d'expulsion (103) sont mobiles, par des moyens de déplacement appropriés, (4, 104, 204) le long d'une direction située sur ledit plan horizontal générique, s'approchant et s'éloignant de ladite chambre d'infusion (1), lesdits moyens d'expulsion (103) étant disposés en contact avec la chambre d'infusion (1) au moment de la jonction des deux parties (101, 201) de la chambre d'infusion, et lesdits moyens d'expulsion (103) étant éloignés de ladite chambre d'infusion (1) lorsque lesdites deux parties (101, 201) de celle-ci sont séparées.

2. Groupe d'infusion selon la revendication 1, dans lequel lesdits moyens d'expulsion (103) comprennent une pince montée à l'extrémité d'une tige, couplée à l'extrémité opposée auxdits moyens mobiles, ladite pince comprend des mâchoires (103, 103') pivotant par rapport à un axe perpendiculaire à ladite tige, et disposées sur un même plan horizontal, et lesdites mâchoires étant munies de moyens d'accouplement mutuel (113), libérables.

3. Groupe d'infusion selon la revendication 2, dans lequel lesdits moyens de couplage mutuel desdites mâchoires comprennent des aimants (113).

4. Groupe d'infusion selon l'une quelconque des revendications précédentes 1 à 3, dans lequel lesdits moyens de déplacement (4, 104, 204) desdits moyens d'expulsion (103) sont synchronisés par rapport au mouvement d'accouplement et de séparation des deux portions (101, 201) de la chambre d'infusion, de sorte que lesdits moyens d'expulsion (103) atteignent ladite chambre d'infusion avant que les deux portions (101, 201) soient accouplées l'une à l'autre, et qu'ils s'éloignent après que les deux portions soient séparées l'une de l'autre.

5. Groupe d'infusion selon la revendication 4, dans lequel lesdits moyens mobiles (4, 104, 204) desdits moyens d'expulsion transmettent également l'actionnement du mouvement relatif entre lesdites parties (101, 201) de la chambre d'infusion, par des moyens de guidage (203, 213) couplés auxdits moyens mobiles.

6. Groupe d'infusion selon l'une quelconque des revendications précédentes 1 à 5, dans lequel lesdits moyens de déplacement (4, 104, 204) comprennent un vérin hydraulique (4) relié au circuit d'alimentation de l'eau sous pression de la machine de préparation de boissons.

7. Machine de préparation de boissons comprenant un groupe d'infusion selon la revendication 6, un réservoir d'eau (7), une pompe (6) reliée audit réservoir (7), et des moyens de chauffage de l'eau (8) reliés audit groupe d'infusion (1) et en communication fluide avec ladite pompe (6), dans laquelle ledit vérin hydraulique (4) est adapté pour agir comme une vanne de distribution dudit circuit d'alimentation en eau sous pression, étant pourvu d'une chambre cylindrique (104) dans laquelle au moins deux orifices radiaux (114, 124) sont formés, mettant la même chambre en communication avec le conduit d'alimentation de l'eau sous pression vers la chambre d'infusion et avec le conduit de décharge vers le réservoir d'eau (7), et étant prévu un piston (204) coulissant de manière étanche dans ladite chambre.
